# EUROPÄISCHE PATENTANMELDUNG

(11) **EP 1 428 426 A1**
(43) Veröffentlichungstag der Anmeldung: **16.06.2004**
(21) Anmeldenummer: 03027703.2
(22) Anmeldetag: 02.12.2003
(51) Int. Cl.: A01J 5/007

(54) **Verfahren zum Melken eines Tieres sowie ein Melkstand**

(30) Priorität: 10.12.2002 DE 10257735
(71) Anmelder: WestfaliaSurge GmbH, 59302 Oelde (DE)
(72) Erfinder: Schulze-Wartenhorst, Bernhard, 48231 Warendorf (DE); Forster, Andreas, 59269 Beckum (DE)
(74) Vertreter: Neumann, Ditmar

(57) **Zusammenfassung**

Zum Melken von Tieren, insbesondere Kühen, wird ein Melkstand vorgeschlagen, der eine Mehrzahl von Melkplätzen (3) und eine zentrale Steuereinrichtung (1), durch die die Melkplätze (3) steuerbar sind, vorgeschlagen. Die Steuereinrichtung (1) weist wenigstens eine Einstelleinheit (4) auf, durch die für wenigstens einige der Melkstände (3) eine im wesentlichen einheitliche Melkdauer zentral eingestellt wird.

## Beschreibung

Der Gegenstand der vorliegenden Erfindung bezieht sich auf ein Verfahren zum Melken eines Tieres, insbesondere von Schafen oder Ziegen sowie auf einen Melkstand. Es können aber auch andere Tiere derart gemolken werden.

Beim traditionellen Handmelken, welches ein Druckmelkverfahren ist, kann annähernd die gesamte im Euter vorhandene Milch ermolken werden. Beim maschinellen Saugmelkverfahren besteht das Problem, dass zum einen einzelne Viertel zu lange gemolken werden, obwohl kein Milchfluss mehr vorhanden ist, und zum anderen, dass bei einzelnen Vierteln der Melkprozess zu früh beendet wird und deshalb Milchreste im Euter verbleiben. Dies hat zum einen verfahrensbedingte und zum anderen anatomische Ursachen. Es besteht die Möglichkeit, dass durch abgeknickte oder verdrehte Zitzen des Euters, durch ungünstige Euterformen oder auch durch nicht auf die Zitzen genau angepasste Melkzeuge und Einstellungen der Melkparameter der Melkvorgang nach dem Saugmelkverfahren so negativ beeinflusst wird, dass die milchführenden Kanäle der Zitzen zu früh verschlossen werden. Hierdurch wird vor allem in den Endphasen des Melkvorgangs, einer Nachmelkphase und einer Ausmelkphase, ein Melkertrag gegenüber dem Handmelken reduziert und auch die gemolkene Milchzusammensetzung kann negativ beeinflusst werden, da insbesondere in den Endphasen des Melkens besonders wertvolle fetthaltige Milchbestandteile gewonnen werden.

Während eines Melkvorgangs zieht sich das Eutergewebe zwischen Drüsen- und Zitzenzisterne unter Einwirkung des Melkdrucks zunehmend zusammen. Aufgrund des erhöhten Vakuums im Inneren des Zitzengummis eines Melkbechers und des versiegenden Milchstroms gegen Ende des Melkvorgangs kann eine Flüssigkeitsansammlung im Bereich des Fürstenbergischen Venenrings hervorgerufen werden. Diese Flüssigkeitsansammlung kann zu Ödembildung führen, durch die es in der Regel zu einem dauerhaften Verschluss der milchleitenden Kanäle in den Zitzen kommen kann, welche lediglich durch eine höhere Zugkraft nach unten wieder geöffnet werden können. Dieser Effekt wird noch verstärkt durch den Beschleunigungsdruck und Fließdruck der Milchsäule. Dies führt in der Regel dazu, dass der Melkbecher an der Zitze nach oben zu klettern beginnt und ein frühzeitiges Einleiten der Aus- bzw. Nachmelkphase erfolgt und hierdurch der Melkvorgang schneller als gewünscht beendet wird.

Zur Vermeidung dieses Effektes ist bekannt, dass auf das Sammelstück des Melkzeugs eine nach unten gerichtete Kraft ausgeübt wird, durch das das Eutergewebe gestrafft und der Verschluss später auftreten kann. Nach einer vorgegebenen Zeit wird der Nachmelkvorgang und somit der gesamte Melkvorgang beendet.

Durch die DE 36 09 275 A1 ist bekannt, dass die zeitliche Änderung der Milchmenge und/oder des Milchflusses innerhalb einzelner Pulszyklen während des maschinellen Milchzugs charakteristische Besonderheiten aufweist, die zur Beurteilung der Wirksamkeit der momentanen Melkparameter Stellung auf die Milchabgabe aus der Zitze ausgewertet werden können. Durch die Auswertung eines Milchflussprofils kann beurteilt werden, ob ein bestimmter Melkparameter optimal eingestellt ist. An dem Verlauf des Milchflussprofils kann auch erkannt werden, dass die Zitze so weit ausgemolken ist, dass die Fortsetzung des Melkvorgangs zum Blindmelken führen würde. In diesem Fall kann z. B. durch eine Steuerung ein Befehl zur Beendigung des Melkvorgangs und eventuell zu einer Melkzeugabnahme gegeben werden.

Durch die EP 0 534 565 A1 ist ein Verfahren zum automatischen Melken von Tieren, wie z. B. Kühen, in einem Melkstand, der einen Computer und einen Melkroboter mit Zitzenbechern aufweist, die automatisch an die Zitzen eines zu melkenden Tieres anzuschließen sind, bekannt. Von einem Strömungssensor werden Signale erzeugt, die den Beginn und das Ende des Milchflusses aus mindestens einer Zitze anzeigen. Wird von dem Computer festgestellt, dass die Totzeit, die zwischen dem Zeitpunkt, zu dem ein auf Vakuum ansprechender Sensor ein ausreichendes Vakuum in einem an eine zugehörige Zitze angeschlossenen Zitzenbecher festgestellt hat und dem Zeitpunkt vergangen ist, zu dem vom Strömungsmesser das Einsetzen eines Milchflusses aus dieser Zitze festgestellt wird, über einen vorgegebenen Zeitpunkt hinausgeht, so wird der Zitzenbecher automatisch außer Betrieb gesetzt.

Ein weiteres Verfahren zum selbständigen Ausmelken beim maschinellen Milchentzug ist durch die DE 28 44 562 A1 bekannt. Hierzu erfolgt eine fortlaufende Milchflussmessung. Die Messung umfasst die Änderungen des Milchflusses pro Zeiteinheit. Unmittelbar während einer Zeitdauer von 5 bis 10 Sekunden festgestellten Abnahme des Milchflusses von mehr als 1 kg/min wird ein geringer Milchfluss festgestellt, so kann ein zusätzliches Signal erzeugt werden, durch das eine Abnahme des Melkzeugs bewirkt wird.

Den vorstehend genannten Verfahren sowie weiteren aus dem Stand der Technik bekannten Verfahren liegt die prinzipielle Überlegung zugrunde, dass das Melkverfahren, insbesondere die Melkdauer, an das Tier individuell angepasst werden muss, um zum einen die Tiergesundheit nicht zu beeinträchtigen und zum anderen um einen möglichst hohen Milchertrag pro Tier zu halten. Ausgehend von diesen Grundüberlegungen sind die vorstehend genannten Verfahren sowie die zugehörigen Vorrichtungen entwickelt worden, die einen relativ hohen verfahrenstechnischen und konstruktiven Aufwand erforderlich machen.

Hiervon ausgehend liegt der vorliegenden Erfindung die Zielsetzung zugrunde, ein Verfahren zum Melken von Tieren sowie einen Melkstand anzugeben, das bzw. der mit relativ einfachen konstruktiven Mitteln verwirklicht werden kann.
Diese Aufgabe wird erfindungsgemäß durch ein Verfahren zum Melken von Tieren nach Anspruch 1 bzw. durch einen Melkstand mit den Merkmalen des Anspruchs gelöst. Vorteilhafte Ausgestaltungen und Weiterbildungen des Verfahrens bzw. des Melkstandes sind Gegenstand der jeweiligen abhängigen Ansprüche.

Das erfindungsgemäße Verfahren zum Melken von Tieren in einem Melkstand, der eine Mehrzahl von Melkplätzen und eine zentrale Steuereinrichtung, durch die die Melkplätze steuerbar sind, aufweist, zeichnet sich erfindungsgemäß dadurch aus, dass für wenigstens einige der Melkstände eine im wesentlichen einheitliche Melkdauer zentral eingestellt wird. Durch das erfindungsgemäße Verfahren wird erreicht, dass das Melkverfahren als solches vereinfacht wird, da die Melkdauer lediglich von der zentral eingestellten Zeitspanne, innerhalb der der Melkvorgang durchgeführt wird, abhängig ist. Die Zeitspanne, innerhalb der der Melkvorgang durchgeführt werden soll, kann auf Erfahrungswerte zurückgeführt werden. Vorzugsweise ist die Melkdauer, die zentral eingestellt wird, veränderbar. Sie kann in Abhängigkeit von der Zusammensetzung der Herde bzw. in Abhängigkeit vom Laktationsstand der Tiere eingestellt wurden. Insbesondere bei Schafen und Ziegen gibt es Herden, bei denen alle Tiere im wesentlichen gleichzeitig, z. B. zu Beginn des Jahres, ablammen. Die Milchabgabe der Tiere verändert sich dann über den Jahresverlauf, so dass eine Anpassung der Melkdauer über der Jahreszeit (Woche oder sogar Tag) sinnvoll ist. Hierbei wirkt sich die zentrale Einstellbarkeit der Melkdauer positiv aus, da diese erhebliche Zeit- und Handhabungsvorteile bietet.

Nach einer vorteilhaften Ausgestaltung des Verfahrens wird vorgeschlagen, dass die Melkdauer für wenigstens einige aus der Mehrzahl der Melkplätze ausgewählte Melkplätze einheitlich einstellbar ist. Hierbei wird bevorzugt eine Ausgestaltung des Verfahrens, bei dem die Mehrzahl der Melkplätze in wenigstens zwei Gruppen von Melkplätzen eingeteilt wird. Diese Verfahrensführung ermöglicht die Berücksichtigung der Zusammensetzung der Herde, da die Herde beispielsweise in zwei Gruppen unterteilt werden kann, wobei die jeweilige Gruppe Tiere enthält, für die eine einheitliche Melkdauer von Vorteil ist, wobei die Melkdauer der einen Gruppe sich von der Melkdauer der anderen Gruppe unterscheiden kann. Hierzu findet vor dem eigentlichen Melkvorgang vorzugsweise eine Vorsortierung der Tiere in die wenigstens zwei Gruppen.

Zu einer noch weiteren Vereinfachung der erfindungsgemäßen Verfahrensführung wird vorgeschlagen, dass die Melkdauer für sämtliche Melkstände im wesentlichen einheitlich eingestellt wird.

Nach einer noch weiteren vorteilhaften Ausgestaltung des Verfahrens wird vorgeschlagen, dass der Beginn eines Melkvorgangs an wenigstens einigen Melkständen zeitversetzt durchgeführt wird. Ein Vorteil dieser Verfahrensführung kann darin gesehen werden, dass der Melker nicht jedes Mal einen Start des Melkvorgangs durchführen muss, da dieser automatisch nach Verstreichen einer vorgegebenen Zeit erfolgt. Die Zeitspanne, um die ein nachfolgender Melkvorgang gestartet wird, kann vom Melker gewählt werden. Der zeitlich versetzte Startvorgang des Melkens hat auch den Vorteil, dass die Tiere nicht gleichzeitig die Melkanlage bzw. die einzelnen Melkplätze belegen müssen. Der Melkvorgang kann bereits gestartet werden, obwohl nicht sämtliche Tiere die Melkplätze belegten, wie dies beispielsweise bei Karussellmelkanlagen der Fall ist.

Der Beginn eines Melkvorgangs in Melkständen einer Gruppe kann einheitlich sein. Der Melkvorgang in Melkständen, in denen sich die Tiere einer Gruppe befinden, kann auch einheitlich durchgeführt werden, wobei der Melkbeginn der Tiere einer weiteren Gruppe zeitversetzt stattfindet.
Nach einem weiteren erfinderischen Gedanken wird ein Melkstand umfassend eine Mehrzahl von Melkplätzen und eine zentrale Steuereinrichtung, durch die die Melkplätze steuerbar sind, vorgeschlagen. Der Melkstand zeichnet sich dadurch aus, dass die Steuereinrichtung wenigstens eine Einstelleinheit aufweist, durch die für wenigstens einige der Melkstände eine im wesentlichen einheitliche Melkdauer einstellbar ist. Durch diesen relativ einfachen konstruktiven Aufwand eines Melkstandes wird die Durchführung eines Melkvorgangs ermöglicht, ohne dass ein hoher technischer Aufwand erforderlich ist.

Die Mehrzahl der Melkplätze ist vorzugsweise in wenigstens zwei Gruppen von Melkplätzen eingeteilt, wobei die Melkdauer für die Melkplätze wenigstens für eine Gruppe einheitlich einstellbar ist. Die Melkdauer wird hierbei mittels Einstelleinheiten zentral für jede Gruppe von Melkplätzen eingestellt. Der konstruktive Aufwand des Melkstandes ist besonders gering, wenn die Melkdauer für sämtliche Melkstände im wesentlichen einheitlich einstellbar ist. Hierzu bedarf es lediglich einer Einstelleinheit, bei der es sich beispielsweise um eine computergesteuerte Einheit handelt. Im Gegensatz zu dem bekannten Stand der Technik, bedarf es keiner zusätzlichen Aggregate, um die Melkdauer zu bestimmen, da diese fest vorgegeben wird. Sie kann jedoch auch variiert werden.

Der Beginn des Melkvorgangs wird vorzugsweise sensorisch gesteuert gestartet. Ein solcher Startvorgang ist insbesondere dann vorteilhaft, wenn das Melkzeug händisch an die Zitzen des zu melkenden Tieres angelegt wird. Alternativ kann der Melkvorgang auch dadurch gestartet werden, dass das Melkzeug aus einer Melkzeughalterung entnommen wird.

Weitere Einzelheiten und Vorteile des erfindungsgemäßen Melkstandes werden anhand der in der Zeichnung dargestellten Ausführungsbeispiele erläutert, ohne dass der Gegenstand der Erfindung auf diese Ausführungsbeispiele beschränkt wird.

Es zeigen:
- Fig. 1: Schematisch ein erstes Ausführungsbeispiel eines erfindungsgemäßen Melkstandes,
- Fig. 2: schematisch ein zweites Ausführungsbeispiel eines erfindungsgemäßen Melkstandes,
- Fig. 3: in Diagrammform den zeitlichen Verlauf der Melkvorgänge in einem Melkanlage und
- Fig. 4: in Diagrammform den zeitlichen Verlauf der Melkvorgänge in einer Melkanlage mit drei Gruppen.

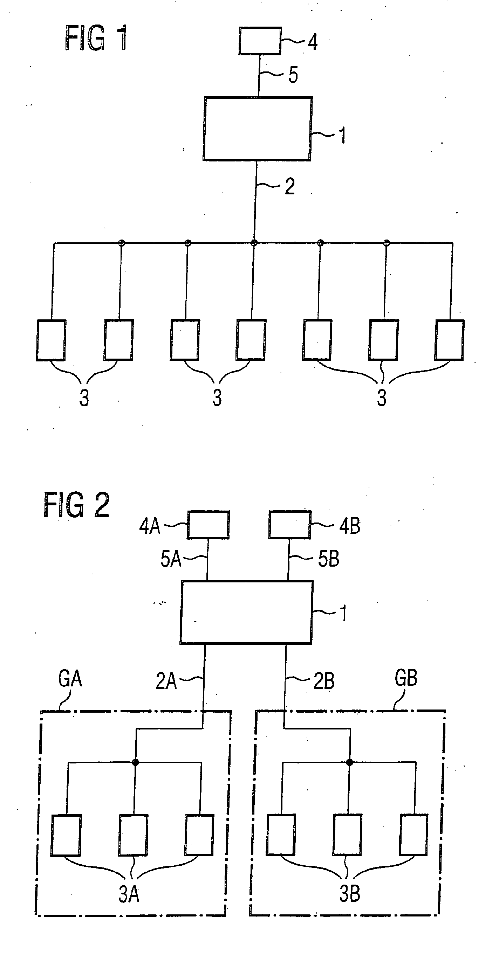

In der Figur 1 ist schematisch ein erstes Ausführungsbeispiel eines erfindungsgemäßen Melkstandes dargestellt. Der Melkstand weist eine Mehrzahl von Melkplätzen 3 auf. Die Melkplätze 3 sind über Steuerleitungen 2 mit einer Steuereinrichtung 1 verbunden. Durch die Steuereinrichtung 1 sind die einzelnen Melkplätze 3 steuerbar. Über eine Signalleitung 5 ist die Steuereinrichtung 1 mit einer Einstelleinheit 4 verbunden. Mittels der Einstelleinheit 4 ist für sämtliche Melkstände eine im wesentlichen einheitliche Melkdauer T einstellbar.

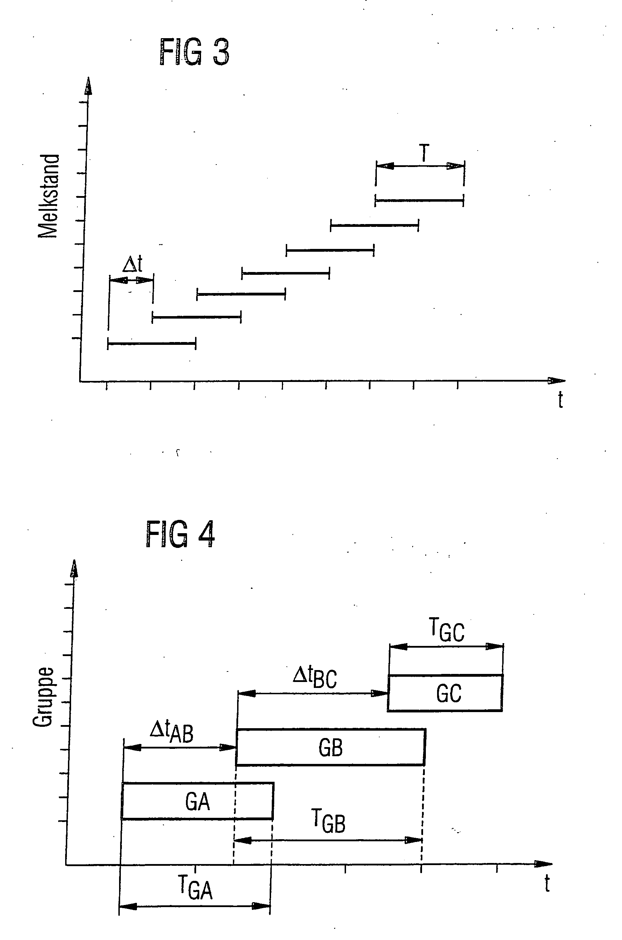

Das in der Figur 3 dargestellte Diagramm zeigt, dass die Melkdauer T für einzelne Melkstände gleich ist. Der Beginn eines Melkvorgangs an den einzelnen Melkständen ist um die Zeitspanne ΔT zeitversetzt. Der Zeitversatz ΔT kann frei wählbar sein. Er kann auch in Abhängigkeit von bestimmten Parametern vorbestimmt werden.

In der Figur 2 ist ein zweites Ausführungsbeispiel eines erfindungsgemäßen Melkstandes dargestellt. Der Melkstand weist Melkplätze 3A, 3B auf, die in zwei Gruppen GA und GB unterteilt sind. Die einzelnen Melkplätze 3A sind über eine Steuerleitung 2A mit einer zentralen Steuereinrichtung 1 verbunden. Die Melkplätze 3B der Gruppe GB sind über eine weitere Steuerleitung 2B gleichfalls mit der zentralen Steuereinrichtung 1 verbunden. In dem dargestellten Ausführungsbeispiel sind zwei Einstelleinheiten 4A und 4B vorgesehen, die über die Signalleitung 5A bzw. 5B mit der zentralen Steuereinrichtung 1 verbunden sind.

Mittels der Einstelleinheit 4A wird die Melkdauer für die Melkplätze 3A der Gruppe GA eingestellt. Zur Einstellung der Melkdauer für die Melkplätze 3B der Gruppe GB dient die Einstelleinheit 4B. Die Melkdauem der Gruppen GA und GB sind vorzugsweise unterschiedlich. Dies ist nicht zwingend notwendig. Es besteht auch die Möglichkeit, dass die Melkdauer für die beiden Gruppen GA und GB gleich ist. Der zeitliche Versatz, zwischen dem Beginn der Melkvorgänge an den Melkplätzen 3A bzw. an den Melkvorgängen an den Melkplätzen 3B ist gleich.

Es besteht auch die Möglichkeit, dass innerhalb der einzelnen Gruppen der Zeitversatz, mit dem der Beginn eines Melkvorgangs gestartet wird, unterschiedlich gewählt werden.

In der Figur 4 ist in Form eines Diagramms und schematisch der Verlauf der Melkvorgänge in einer Melkanlage mit drei Gruppen GA, GB und GC dargestellt. Die Dauer des Melkvorgangs in der Gruppe GA ist durch TG_{A} gekennzeichnet.

Für die Gruppe GB ist eine Melkdauer TG_{B} gewählt. Die Melkdauer der Gruppe GC ist mit TG_{C} bezeichnet. Die Melkdauern der drei Gruppen GA, GB und GC sind unterschiedlich. Dies ist nicht zwingend notwendig. Es besteht die Möglichkeit, dass die Melkdauer wenigstens zwei Melkgruppen gleich ist. Aus dem Diagramm ist des weiteren ersichtlich, dass der zeitliche Versatz Δt_{AR} zwischen dem Melkbeginn an den Melkplätzen der Gruppe GA und den Melkplätzen der Gruppe GB sich von dem zeitlichen Versatz Δt_{BC} des Beginns des Melkvorgangs an den Melkplätzen der Gruppe GB und GC unterscheidet. Dies ist nicht zwingend notwendig. Es besteht auch die Möglichkeit, dass der zeitliche Versatz Δt gleich ist. Der zeitliche Versatz, um den der Melkbeginn verschoben werden kann, kann tier- , herden- und/oder melkerabhängig gewählt sein.

Durch die zentrale Einstellbarkeit der Melkdauer bzw. eines Zeitversatzes hinsichtlich des Beginns eines Melkvorgangs werden erhebliche Zeit- und Handhabungsvorteile erzielt, da sie zentral durchgeführt werden können. Insbesondere beim Melken von Schafen oder Ziegen hat die Erfindung zahlreiche Vorteile. Die zentrale Steuerung geht einher mit einem verringerten technischen Aufwand, ,wodurch das Verfahren bzw. die Melkanlage kostengünstiger ausgebildet sein kann. Der geringere konstruktive Aufwand hat auch den Vorteil, dass eine schnellere Montage der Anlage vor Ort erreicht wird.

Der erfindungsgemäße Melkstand hat insbesondere bei der Verwendung des Melkstandes beim Melken von Schafen und Ziegen einen nicht unerheblichen Platzvorteil, da am Melkstand keine Steuerung mit hohem Platzbedarf erforderlich ist. Der so gewonnene Platz kann dazu genutzt werden in dem vorhandenen Melkbereich weitere Melkstände vorzusehen, so dass eine höhere Tierdichte bzw. eine höhere Melkstanddichte im Melkbereich erzielt wird.

Der zeitliche Versatz des Melkbeginns kann, wie bereits vorstehend ausgeführt tier- oder herdenabhängig gewählt werden. Sind die Melkstände Bestandteil einer Melkanlage, die über Tiererkennungsmittel verfügt, so kann der zeitliche Versatz aus den Daten des Tierherdenmanagements ermittelt werden. Der zeitliche Versatz kann auch in Abhängigkeit vom Melker gewählt werden. Hierbei kann die Zeit, die der Melker benötigt, um die Melkbecher anzusetzen, entsprechend berücksichtigt werden.

Das erfindungsgemäße Verfahren sowie der erfindungsgemäße Melkstand eignet sich besonders für das Melken von Ziegen oder Schafen, da während eines Melkvorgangs bei diesen Tieren keine Milchflussmessung durchgeführt wird.

## Patentansprüche

1. Verfahren zum Melken von Tieren in einem Melkstand, der eine Mehrzahl von Melkplätzen (3, 3A, 3B) und eine zentrale Steuereinrichtung (1), durch die die Melkplätze (3, 3A, 3B) steuerbar sind, aufweist, bei dem für wenigstens einige der Melkstände (3, 3A, 3B) eine im wesentlichen einheitliche Melkdauer (T, T_{GA}, T_{GB}, T_{GC}) zentral eingestellt wird.

2. Verfahren nach Anspruch 1, bei dem die Melkdauer (T, T_{GA}, T_{GB}, T_{GC}) für wenigstens einige aus der Mehrzahl der Melkplätze ausgewählte Melkplätze (3, 3A, 3B) einheitlich einstellbar ist.

3. Verfahren nach Anspruch 2, bei dem die Mehrzahl der Melkplätze in wenigstens zwei Gruppen (GA, GB) von Melkplätzen (3A, 3B) eingeteilt wird.

4. Verfahren nach Anspruch 1, 2 oder 3, bei dem die Melkdauer (T) für sämtliche Melkstände (3) im wesentlichen einheitlich eingestellt wird.

5. Verfahren nach einem der Ansprüche 1 bis 4, bei dem der Beginn eines Melkvorgangs an wenigstens einigen Melkständen (3, 3A, 3B) zeitversetzt durchgeführt wird.

6. Verfahren nach Anspruch 5, bei dem der Beginn eines Melkvorgangs in Melkständen (3A) einer Gruppe (GA) einheitlich jedoch der Melkbeginn (3B) der Gruppen (GB) zeitversetzt sind.

7. Verfahren nach einem der Ansprüche 1 bis 6, bei dem die Melkdauer in Abhängigkeit vom Laktationsstand der Tiere und/oder in Abhängigkeit von der Saison eingestellt wird.

8. Verfahren nach einem der Ansprüche 1 bis 7, bei dem der Melkvorgang mit der Abnahme des Melkzeugs beendet wird.

9. Verfahren nach Anspruch 8, bei dem das Abnehmens des Melkzeugs automatisch erfolgt.

10. Melkstand umfassend eine Mehrzahl von Melkplätzen (3, 3A, 3B) und eine zentrale Steuereinrichtung (1), durch die die Melkplätze (3, 3A, 3B) steuerbar sind, wobei die Steuereinrichtung (1) wenigstens eine Einstelleinheit (4, 4A, 4B) aufweist, durch die für wenigstens einige der Melkstände (3, 3A, 3B) eine im wesentlichen einheitliche Melkdauer (T, T_{GA}, T_{GB}, T_{GC}) einstellbar ist.

11. Melkstand nach Anspruch 10, **dadurch gekennzeichnet, dass** die Mehrzahl der Melkplätze in wenigstens zwei Gruppen (GA, GB) von Melkplätzen (3A, 3B) eingeteilt ist, wobei die Melkdauer (T_{GA}, T_{GB}) für die Melkplätze wenigstens einer Gruppe (GA, GB) einheitlich einstellbar ist.

12. Melkstand nach Anspruch 10 oder 11, **dadurch gekennzeichnet, dass** die Melkdauer (T) für sämtliche Melkstände (3, 3A, 3B) im wesentlichen einheitlich einstellbar ist.

13. Melkstand nach Anspruch 10, 11 oder 12, **dadurch gekennzeichnet, dass** der Beginn eines Melkvorgangs an wenigstens einigen Melkständen (3, 3A, 3B) zeitversetzt erfolgt.

14. Melkstand nach Anspruch 13, **dadurch gekennzeichnet, dass** der Beginn eines Melkvorgangs in den Melkständen (3A) innerhalb einer Gruppe (GA) einheitlich jedoch der Melkbeginn der Gruppen (3B) zeitversetzt ist.

15. Melkstand nach einem der Ansprüche 10 bis 14, **dadurch gekennzeichnet, dass** der Melkvorgang an wenigstens einem Melkplatz (3, 3A, 3B) sensorisch gesteuert gestartet wird.

16. Melkstand nach Anspruch 15, **dadurch gekennzeichnet, dass** der Melkvorgang durch Anlage oder Entnahme des Melkzeugs gestartet wird.
